# EUROPEAN PATENT SPECIFICATION

(11) **EP 3 133 528 B1**
(45) Date of publication and mention of the grant of the patent: **13.11.2019**
(21) Application number: 16181273.0
(22) Date of filing: 26.07.2016
(51) Int. Cl.: G06K 9/00, G06F 21/32

(54) **METHOD AND APPARATUS FOR FINGERPRINT IDENTIFICATION**
VERFAHREN UND VORRICHTUNG ZUR FINGERABDRUCKIDENTIFIKATION
PROCÉDÉ ET APPAREIL D'IDENTIFICATION D'EMPREINTES DIGITALES

(30) Priority: 21.08.2015 CN 201510520041
(43) Date of publication of application: 22.02.2017
(73) Proprietor: Xiaomi Inc., Beijing 100085 (CN)
(72) Inventor: JIANG, Zhongsheng, Haidian District, Beijing 100085 (CN); TAO, Jun, Haidian District, Beijing 100085 (CN); LIU, Dan, Haidian District, Beijing 100085 (CN)
(74) Representative: Nevett, Duncan

(56) References cited:
- EP-A2- 2 892 002
- US-A1- 2015 067 827

## Description

### TECHNICAL FIELD

The present disclosure relates to fields of communication technology, and more particularly, to a method and an apparatus for fingerprint identification.

### BACKGROUND

With rapid development of technology related to mobile terminals, various mobile terminals such as mobile phones have become widely used with increasing functions. Novel functions bring convenience to daily life and thus are well enjoyed by users. For example, a conventional mobile phone is provided with a virtual button for fingerprint identification, by touching which a user can perform the fingerprint identification for completing an unlock operation. An example prior art is EP2892002

A typical virtual button for fingerprint identification is implemented by providing a fingerprint identification sensor under a glass cover. When a user touches the glass cover with a finger, finger signal can be recognized by the fingerprint identification sensor for further fingerprint identification.

However, sensitivity of the fingerprint identification sensor, and thus a rate of successful fingerprint identification, is poor, since the fingerprint identification sensor is provided under the glass cover.

### SUMMARY OF THE INVENTION

The invention is defined in the independent claims to which reference should now be made. Advantageous features are set out in the dependent claims.

Technical solution according to embodiments of the present disclosure may provide, at least in part, following advantageous effects. The current application conditions information is acquired and the feature threshold corresponding to the security level of fingerprint identification is obtained based thereon, the fingerprint identification is then performed according to the extracted feature information and the corresponding feature threshold, thus a process of fingerprint identification can be finished based on the feature threshold corresponding to the security level of fingerprint identification, thereby improving a rate of successful fingerprint identification.

A process for obtaining the feature threshold is provided to facilitate achievement of the fingerprint identification.

The first correspondence between different application program identifiers and the security levels of fingerprint identification and the second correspondence between different security levels of fingerprint identification and the feature thresholds are stored, thereby facilitating acquisition of the feature threshold.

The feature threshold corresponding to the security level of fingerprint identification for the current application program can be obtained based on the current application program identifier and the first and second correspondences.

The interface for setting security levels of fingerprint identification is displayed, such that the user is able to set security levels of fingerprint identification for different application programs directly on the interface for setting security levels of fingerprint identification, with no need for the user to access the interface for setting security levels of fingerprint identification by other means, thereby achieving simplified operation.

Another process for obtaining the feature threshold is provided to facilitate achievement of the fingerprint identification.

The first correspondence between different system environment and the security levels of fingerprint identification and the second correspondence between different security levels of fingerprint identification and the feature thresholds are stored, thereby facilitating acquisition of the feature threshold.

The feature threshold corresponding to the security level of fingerprint identification for the current system environment can be obtained based on the current system environment information and the first and second correspondences.

The interface for setting security levels of fingerprint identification is displayed, such that the user is able to set security levels of fingerprint identification for different system environment directly on the interface for setting security levels of fingerprint identification, with no need for the user to access the interface for setting security levels of fingerprint identification by other means, thereby achieving simplified operation.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for fingerprint identification according to an exemplary embodiment.
Fig. 2 is a flow chart illustrating a process for obtaining feature threshold according to an exemplary embodiment.
Fig. 3 is a flow chart illustrating another process for obtaining feature threshold according to an exemplary embodiment.
Fig. 4a is a first block diagram illustrating an interface of a mobile terminal according to an exemplary embodiment.
Fig. 4b is a second block diagram illustrating an interface of a mobile terminal according to an exemplary embodiment.
Fig. 5 is a flow chart illustrating yet another process for obtaining feature threshold according to an exemplary embodiment.
Fig. 6 is a flow chart illustrating still another process for obtaining feature threshold according to an exemplary embodiment.
Fig. 7a is a third block diagram illustrating an interface of a mobile terminal according to an exemplary embodiment.
Fig. 7b is a fourth block diagram illustrating an interface of a mobile terminal according to an exemplary embodiment.
Figs. 8a-8c is a schematic diagram illustrating a scenario of a method for fingerprint identification according to an exemplary embodiment.
Fig. 9 is a block diagram illustrating an apparatus for fingerprint identification according to an exemplary embodiment.
Fig. 10 is a block diagram illustrating another apparatus for fingerprint identification according to an exemplary embodiment.
Fig. 11 is a block diagram illustrating another apparatus for fingerprint identification according to an exemplary embodiment.
Fig. 12 is a block diagram illustrating another apparatus for fingerprint identification according to an exemplary embodiment.
Fig. 13 is a block diagram illustrating another apparatus for fingerprint identification according to an exemplary embodiment.
Fig. 14 is a block diagram illustrating a device suitable for fingerprint identification according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

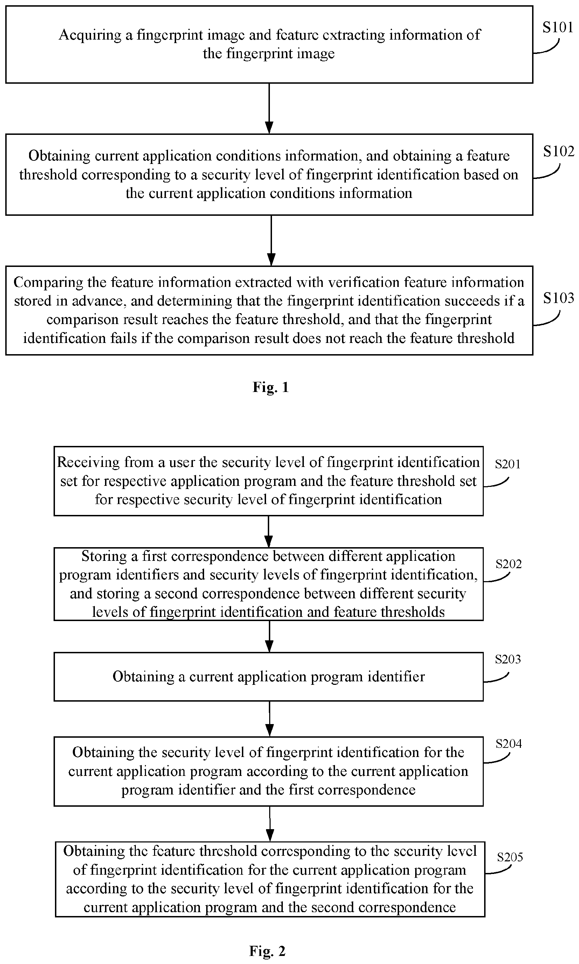

Fig. 1 is a flow chart illustrating a method for fingerprint identification according to an exemplary embodiment. As shown in Fig. 1, the method for fingerprint identification is applicable in a mobile terminal, for example, a terminal device such as a mobile phone and a tablet computer, and includes following steps S101-S103.

In step S101, a fingerprint image is acquired and feature information of the fingerprint image is extracted.

In the embodiment, when a user touch with a finger on the mobile terminal, for example, on a virtual button for fingerprint identification of a mobile phone, a fingerprint image of the user can be acquired and pre-processed by a fingerprint identification circuit of the mobile terminal, such that the feature information of the fingerprint image can be extracted from the preprocessed fingerprint image.

In step S102, the current status of the terminal device is determined. That is, the current software conditions of the device are determined. As illustrated in more detail below, the current software conditions of the terminal device may be at least partially defined by current application conditions information. For example, the current status of the terminal device may be at least partially defined by the application that is currently in use on the terminal device, such as the application that is currently being displayed on a screen of the terminal device. Alternatively or additionally, the current status of the terminal device may be at least partially defined by current system environment information. For example, the current status of the terminal device may be at least partially defined by the current state of the device's operating system. Such states include a lock mode, such a screen lock, and a sleep mode. The following description describes the determining of the current status of the terminal device in respect of current application conditions information and current system environment information.

In step S102 of Figure 1, the current status of the terminal device is determined by obtaining current application conditions information, and a feature threshold, and in particular a feature threshold value, corresponding to a security level of fingerprint identification is obtained based on the current application conditions information.

In an embodiment, the current application conditions information may include an application program identifier or current system environment information, for example, information indicative of whether an operation system of the mobile phone is currently in a state of screen lock.

In the embodiment, the current application conditions information can be obtained by the fingerprint identification circuit. For example, the current application program identifier is obtained, and a feature threshold corresponding to the security level of fingerprint identification for a current application program is obtained based on the current application program identifier. For another example, the current system environment information is obtained, and the feature threshold corresponding to the security level of fingerprint identification for current system environment is obtained based on the current system environment information.

In an embodiment, different application conditions information may correspond to different security levels of fingerprint identification, while different security levels of fingerprint identification may correspond to different feature thresholds.

For example, a security level of fingerprint identification for awaking and unlocking screen may correspond to a first level, while a security level of fingerprint identification for payment with fingerprint may correspond to a fourth level, where the first level is weaker than the fourth level. For a further example, a feature threshold corresponding to the first level may be 0.6, while a feature threshold corresponding to the fourth level may be 1.

It should be noted that, the security levels of fingerprint identification and the feature thresholds thereof are described as above for purpose of exemplary illustration instead of being limited by the embodiments of the present disclosure.

Moreover, there is no limitation applied on the order for performing the steps S101 and S102 described above.

In step S103, the feature information extracted is compared with verification feature information stored in advance, and it is determined that the fingerprint identification succeeds if a comparison result reaches the feature threshold, and that the fingerprint identification fails if the comparison result does not reach the feature threshold.

In the embodiment, verification feature information for verifying whether the fingerprint information is valid may be stored in the mobile terminal prior to the fingerprint identification. In this way, once the feature information of the fingerprint image is extracted and the feature threshold corresponding to the security level of fingerprint identification is obtained, the feature information extracted can be compared with the prestored verification feature information. Furthermore, the fingerprint identification succeeds if the comparison result reaches the feature threshold, otherwise, the fingerprint identification fails if the comparison result does not reach the feature threshold.

Assuming that, there are 5 features included in the prestored verification feature information, and the security level of fingerprint identification for the current application program is at the first level, corresponding to a feature threshold of 0.6. Thus, in comparison between the extracted feature information and the verification feature information, it can be determined the fingerprint identification succeeds if there are matches for three of the features, that is, the comparison result reaches the corresponding feature threshold. Otherwise, it can be determined the fingerprint identification fails if there are matches for only two of the features, that is, the comparison result does not reach the corresponding feature threshold.

According to the embodiments of the method for fingerprint identification described above, the current application conditions information is acquired and the feature threshold corresponding to the security level of fingerprint identification is obtained based thereon, the fingerprint identification is then performed according to the extracted feature information and the corresponding feature threshold, thus a process of fingerprint identification can be finished based on the feature threshold corresponding to the security level of fingerprint identification, thereby improving a rate of successful fingerprint identification.

Fig. 2 is a flow chart illustrating a process for obtaining feature threshold according to an exemplary embodiment. As shown in Fig. 2, the process includes following steps S201-S205.

In step S201, the security level of fingerprint identification set for respective application programs and the corresponding feature threshold set for said security level of fingerprint identifications are received from a user. That is, for a single application program, program A, a security level of fingerprint identification is set, and an associated feature threshold is set for said security level of fingerprint identification. If there are more than one application programs, then one more or additional security level of fingerprint identifications can be set for each additional program, and a corresponding feature threshold can be set for each of the one more or additional security level of fingerprint identifications.

In order to improve the success rate of fingerprint identification, security levels of fingerprint identification can be set by the user for different application programs, and feature thresholds can be set by the user for different security levels of fingerprint identification.

For example, it can be set that application programs A-D correspond to the first level, application programs E and G correspond to the second level, and an application program G corresponds to the third level. Furthermore, it can be set that a feature threshold of the first level is 0.6, that of the second level is 0.8, and that of the third level is 0.9.

In step S202, a first correspondence between different application program identifiers and security levels of fingerprint identification is stored, and a second correspondence between different security levels of fingerprint identification and feature thresholds is stored.

In the embodiment, after the security levels of fingerprint identification for different application programs and the feature thresholds for different security levels of fingerprint identification are already set, the first correspondence between different application program identifiers and the security levels of fingerprint identification, as well as the second correspondence between different security levels of fingerprint identification and the feature thresholds can be stored.

In step S203, a current application program identifier is obtained.

In the embodiment, the current application program identifier can be obtained by the fingerprint identification IC (Integrated Circuit) circuit of the mobile terminal.

In step S204, the security level of fingerprint identification for the current application program is obtained according to the current application program identifier and the first correspondence.

In the embodiment, the security level of fingerprint identification for the current application program can be obtained according to the obtained current application program identifier and the stored first correspondence.

In step S205, the feature threshold corresponding to the security level of fingerprint identification for the current application program is obtained according to the security level of fingerprint identification for the current application program and the second correspondence.

In the embodiment, the feature threshold corresponding to the security level of fingerprint identification for the current application program can be obtained according to the obtained security level of fingerprint identification and the stored second correspondence.

According to the embodiment described above, the first correspondence between different application program identifiers and the security levels of fingerprint identification and the second correspondence between different security levels of fingerprint identification and the feature thresholds are stored, consequently, once the current application program identifier is obtained, the feature threshold corresponding to the security level of fingerprint identification for the current application program can be obtained based on the current application program identifier and the first and second correspondences, thereby facilitating achievement of the fingerprint identification.

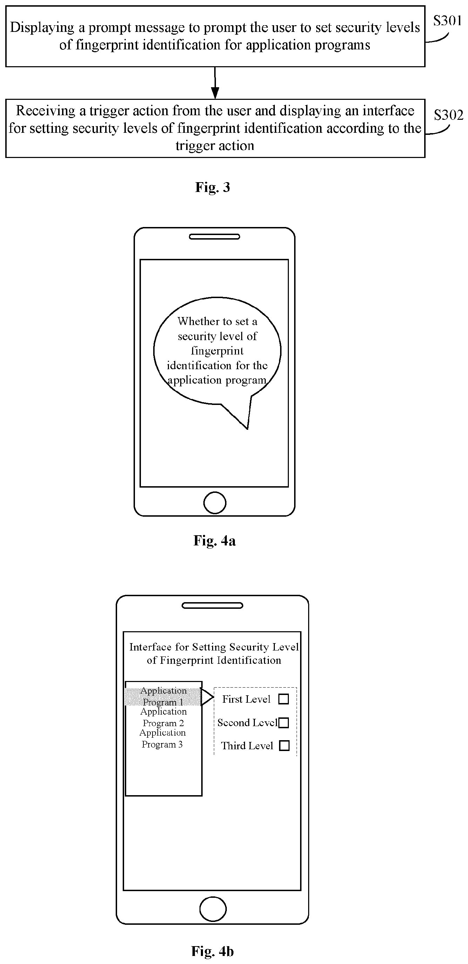

Fig. 3 is a flow chart illustrating another process for obtaining feature threshold according to an exemplary embodiment. As shown in Fig. 3, prior to the step S201, the process further includes following steps.

In step S301, a prompt message is displayed to prompt the user to set security levels of fingerprint identification for application programs.

In the embodiment, the prompt message can be displayed by the mobile terminal at intervals, for example, every other week, so as to prompt the user to set a security level of fingerprint identification for an application program. Alternatively, the prompt message can be displayed under other trigger conditions.

As shown in Fig. 4a, a prompt message "whether to set a security level of fingerprint identification for the application program" is displayed on the mobile phone.

In step S302, a trigger action is received from the user and an interface for setting security levels of fingerprint identification is displayed according to the trigger action.

Subsequent to the example described above, the user may click a "confirm" button if he/she intends to set the security level of fingerprint identification, and may click a "cancel" button if he/she does not intend to set the security level of fingerprint identification. Assuming that the user clicks the "confirm" button, the interface for setting security levels of fingerprint identification then can be displayed on the mobile phone. As shown in Fig. 4b, the interface for setting security levels of fingerprint identification includes information on application programs and security levels for the user's selection. For example, the user selects security levels for an application program 1 and, assuming the first level is selected as the security level, checks a select box behind the first level.

According to the embodiment described above, the interface for setting security levels of fingerprint identification is displayed, such that the user is able to set security levels of fingerprint identification for different application programs directly on the interface for setting security levels of fingerprint identification, with no need for the user to access the interface for setting security levels of fingerprint identification by other means, thereby achieving simplified operation.

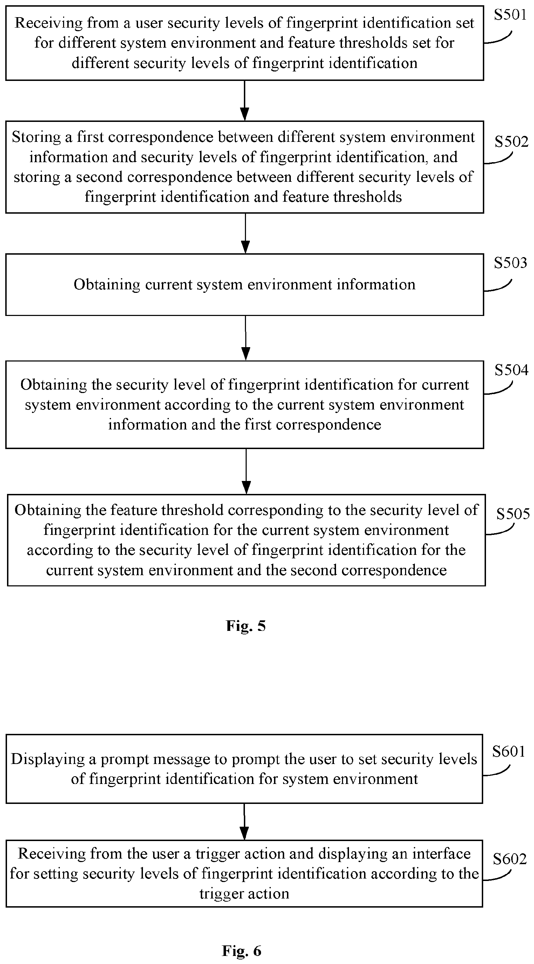

Fig. 5 is a flow chart illustrating yet another process for obtaining feature threshold according to an exemplary embodiment. As shown in Fig. 5, the process includes following steps S501-S505.

In step S501, security levels of fingerprint identification set for different system environment and feature thresholds set for different security levels of fingerprint identification are received from a user.

In order to improve the success rate of fingerprint identification, security levels of fingerprint identification can be set by the user for different system environment, and feature thresholds can be set by the user for different security levels of fingerprint identification.

For example, it can be set that system environment M corresponds to the first level, system environment N corresponds to the second level. Furthermore, it can be set that a feature threshold of the first level is 0.6, and that of the second level is 0.8.

In step S502, a first correspondence between different system environment information and security levels of fingerprint identification is stored, and a second correspondence between different security levels of fingerprint identification and feature thresholds is stored.

In the embodiment, after the security levels of fingerprint identification for different system environment and the feature thresholds for different security levels of fingerprint identification are already set, the first correspondence between different system environment information and the security levels of fingerprint identification, as well as the second correspondence between different security levels of fingerprint identification and the feature thresholds can be stored.

In step S503, current system environment information is obtained.

In the embodiment, the current system environment information can be obtained by the fingerprint identification IC circuit of the mobile terminal.

In step S504, the security level of fingerprint identification for current system environment is obtained according to the current system environment information and the first correspondence.

In the embodiment, the security level of fingerprint identification for the current system environment can be obtained according to the obtained current system environment information and the stored first correspondence.

In step S505, the feature threshold corresponding to the security level of fingerprint identification for the current system environment is obtained according to the security level of fingerprint identification for the current system environment and the second correspondence.

In the embodiment, the feature threshold corresponding to the security level of fingerprint identification for the current system environment can be obtained according to the obtained security level of fingerprint identification and the stored second correspondence.

According to the embodiment described above, the first correspondence between different system environment information and the security levels of fingerprint identification and the second correspondence between different security levels of fingerprint identification and the feature thresholds are stored, consequently, once the current system environment information is obtained, the feature threshold corresponding to the security level of fingerprint identification for the current system environment can be obtained based on the current system environment information and the first and second correspondences, thereby facilitating achievement of the fingerprint identification.

Fig. 6 is a flow chart illustrating still another process for obtaining feature threshold according to an exemplary embodiment. As shown in Fig. 6, prior to the step S501, the process further includes following steps.

In step S601, a prompt message is displayed to prompt the user to set security levels of fingerprint identification for system environment.

In the embodiment, the prompt message can be displayed by the mobile terminal at intervals, for example, every other week, so as to prompt the user to set a security level of fingerprint identification for system environment. Alternatively, the prompt message can be displayed under other trigger conditions.

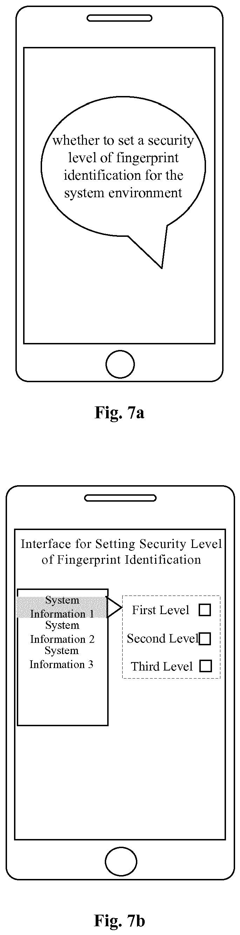

As shown in Fig. 7a, a prompt message "whether to set a security level of fingerprint identification for the system environment" is displayed on the mobile phone.

In step S602, a trigger action is received from the user and an interface for setting security levels of fingerprint identification is displayed according to the trigger action.

Subsequent to the example described above, the user may click a "confirm" button if he/she intends to set the security level of fingerprint identification, and may click a "cancel" button if he/she does not intend to set the security level of fingerprint identification. Assuming that the user clicks the "confirm" button, the interface for setting security levels of fingerprint identification then can be displayed on the mobile phone. As shown in Fig. 7b, the interface for setting security levels of fingerprint identification includes system environment information and security levels for the user's selection. For example, the user selects security levels for system environment 1 and, assuming the second level is selected as the security level, checks a select box behind the second level.

According to the embodiment described above, the interface for setting security levels of fingerprint identification is displayed, such that the user is able to set security levels of fingerprint identification for different system environment directly on the interface for setting security levels of fingerprint identification, with no need for the user to access the interface for setting security levels of fingerprint identification by other means, thereby achieving simplified operation.

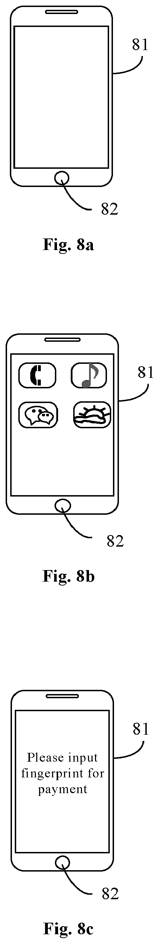

The present disclosure will now be exemplarily described as follows with reference to Figs. 8a-8c. As shown in Fig. 8a, when a user intends to use a mobile phone 81, which is in a state of screen lock, the user needs to touch with a finger on a fingerprint identification virtual button 82 of the mobile phone 81. Once the user touches the fingerprint identification virtual button 82, a fingerprint image of the user can be acquired by a fingerprint identification circuit of the mobile phone 81, and feature information can be extracted from the fingerprint image. At the same time, it is determined the operation system of the mobile phone is in the state of screen lock, thus a feature threshold corresponding to a security level of fingerprint identification for unlocking screen is obtained. Subsequently, the fingerprint identification can be performed based on the extracted feature information and the obtained feature threshold, and the mobile phone 81 can be unlocked successfully if the fingerprint identification succeeds. An interface shown after the mobile phone 81 is unlocked successfully is as illustrated in Fig. 8b. The user then can click on an application program for purchase on the mobile phone 81. Upon paying for purchased stuff, payment with finger can be adopted in order to improve security of payment, and achieved by the user pressing a finger against the fingerprint identification virtual button 82 according to a prompt message displayed on an interface as shown in Fig. 8c. In this way, fingerprint identification can be performed for different application conditions according to the embodiment with a high rate of successful identification, and repeated failure of fingerprint identification can be avoided, thereby providing convenience for the user.

Corresponding to embodiments of the method for fingerprint identification described above, there are also provided embodiments of an apparatus for fingerprint identification according to the present disclosure.

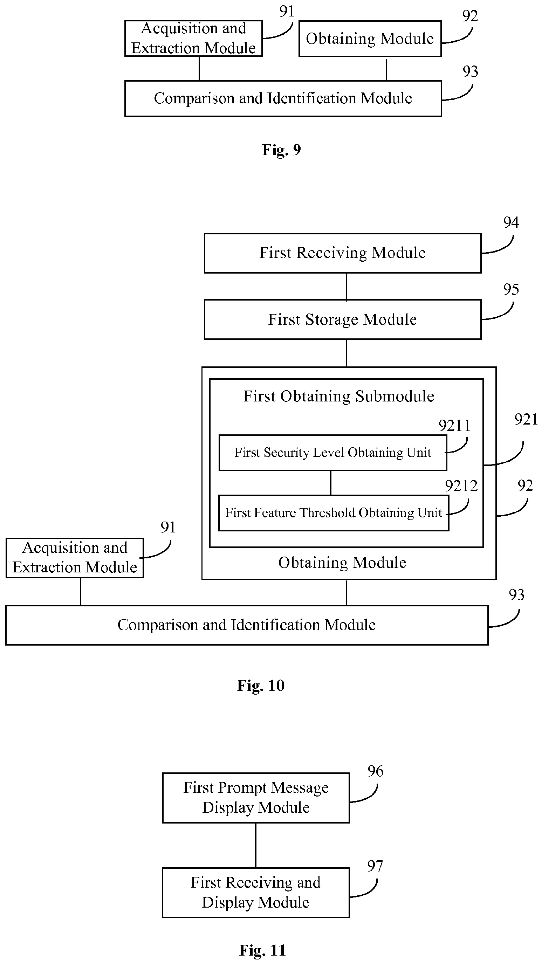

Fig. 9 is a block diagram illustrating an apparatus for fingerprint identification according to an exemplary embodiment. As shown in Fig. 9, the apparatus for fingerprint identification includes an acquisition and extraction module 91, an obtaining module 92 and an identification module 93.

The acquisition and extraction module 91 is configured to acquire a fingerprint image and extract feature information of the fingerprint image.

The obtaining module 92 is configured to obtain current application conditions information and obtain a feature threshold corresponding to a security level of fingerprint identification based on the current application conditions information.

The comparison and identification module 93 is configured to compare the feature information extracted by the acquisition and extraction module 91 with verification feature information stored in advance, determine the fingerprint identification succeeds if a comparison result reaches the feature threshold obtained by the obtaining module 92, and determine the fingerprint identification fails if the comparison result does not reach the feature threshold.

A process of fingerprint identification for the apparatus shown in Fig. 9 may refer to corresponding parts in the embodiment of method shown in Fig. 1 and will not be elaborated herein.

According to the embodiments of the apparatus for fingerprint identification described above, the current application conditions information is acquired and the feature threshold corresponding to the security level of fingerprint identification is obtained based thereon, the fingerprint identification is then performed according to the extracted feature information and the corresponding feature threshold, thus a process of fingerprint identification can be finished based on the feature threshold corresponding to the security level of fingerprint identification, thereby improving a rate of successful fingerprint identification.

Fig. 10 is a block diagram illustrating another apparatus for fingerprint identification according to an exemplary embodiment. As shown in Fig. 10, the obtaining module 92, based on the embodiment as shown in Fig. 9, further includes a first obtaining submodule 921.

The first obtaining submodule 921 is configured to obtain a current application program identifier and obtain the feature threshold corresponding to the security level of fingerprint identification for a current application program based on the current application program identifier.

In addition, the apparatus may also include a first receiving module 94 and a first storage module 95.

The first receiving module 94 is configured to, before the first obtaining submodule 021 obtains the feature threshold corresponding to the security level of fingerprint identification for the current application program based on the current application program identifier, receive from a user the security levels of fingerprint identification set for different application programs and the feature thresholds set for different security levels of fingerprint identification.

The first storage module 95 is configured to store a first correspondence between different application program identifiers and the security levels of fingerprint identification received by the first receiving module 94, and store a second correspondence between different security levels of fingerprint identification and the feature thresholds.

In an embodiment, the first obtaining submodule 921 may further include a first security level obtaining unit 9211 and a first feature threshold obtaining unit 9212.

The first security level obtaining unit 9211 is configured to obtain the security level of fingerprint identification for the current application program according to the current application program identifier and the first correspondence.

The first feature threshold obtaining unit 9212 is configured to obtain the feature threshold corresponding to the security level of fingerprint identification for the current application program according to the security level of fingerprint identification for the current application program obtained by the first security level obtaining unit 9211 and the second correspondence.

A process of fingerprint identification for the apparatus shown in Fig. 10 may refer to corresponding parts in the embodiment of method shown in Fig. 2 and will not be elaborated herein.

According to the embodiment described above, the first correspondence between different application program identifiers and the security levels of fingerprint identification and the second correspondence between different security levels of fingerprint identification and the feature thresholds are stored, consequently, once the current application program identifier is obtained, the feature threshold corresponding to the security level of fingerprint identification for the current application program can be obtained based on the current application program identifier and the first and second correspondences, thereby facilitating achievement of the fingerprint identification.

Fig. 11 is a block diagram illustrating another apparatus for fingerprint identification according to an exemplary embodiment. As shown in Fig. 11, the apparatus, based on the embodiment as shown in Fig. 10, further includes a first prompt message display module 96 and a first receiving and display module 97.

The first prompt message display module 96 is configured to, before the first receiving module 94 receives from the user the security levels of fingerprint identification set for different application programs and the feature thresholds set for different security levels of fingerprint identification, display a prompt message to prompt the user to set a security level of fingerprint identification for an application program.

The first receiving and display module 97 is configured to receive from the user a trigger action and display an interface for setting security levels of fingerprint identification according to the trigger action.

A process of fingerprint identification for the apparatus shown in Fig. 11 may refer to corresponding parts in the embodiment of method shown in Fig. 3 and will not be elaborated herein.

According to the embodiment described above, the interface for setting security levels of fingerprint identification is displayed, such that the user is able to set security levels of fingerprint identification for different application programs directly on the interface for setting security levels of fingerprint identification, with no need for the user to access the interface for setting security levels of fingerprint identification by other means, thereby achieving simplified operation.

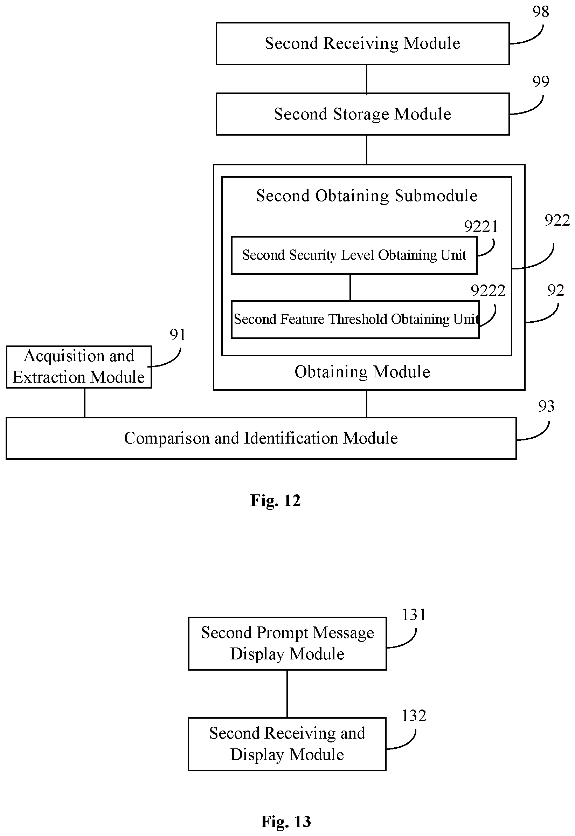

Fig. 12 is a block diagram illustrating another apparatus for fingerprint identification according to an exemplary embodiment. As shown in Fig. 12, the obtaining module 92, based on the embodiment as shown in Fig. 9, further includes a second obtaining submodule 922.

The second obtaining submodule 922 is configured to obtain current system environment information and obtain the feature threshold corresponding to the security level of fingerprint identification for current system environment based on the current system environment information.

In addition, the apparatus may also include a second receiving module 98 and a second storage module 99.

The second receiving module 98 is configured to, before the second obtaining submodule obtains the feature threshold corresponding to the security level of fingerprint identification for the current system environment based on the current system environment information, receive from a user security levels of fingerprint identification set for different system environment and feature thresholds set for different security levels of fingerprint identification.

The second storage module 99 is configured to store a first correspondence between different system environment information and the security levels of fingerprint identification received by the second receiving module 98, and store a second correspondence between the different security levels of fingerprint identification and the feature thresholds.

In an embodiment, the second obtaining submodule 922 may further include a second security level obtaining unit 9221 and a second feature threshold obtaining unit 9222.

The second security level obtaining unit 9221 is configured to obtain the security level of fingerprint identification for the current system environment according to the current system environment information and the first correspondence.

The second feature threshold obtaining unit 9222 is configured to obtain the feature threshold corresponding to the security level of fingerprint identification for the current system environment according to the security level of fingerprint identification for the current system environment obtained by the second security level obtaining unit 9221 and the second correspondence.

A process of fingerprint identification for the apparatus shown in Fig. 12 may refer to corresponding parts in the embodiment of method shown in Fig. 5 and will not be elaborated herein.

According to the embodiment described above, the first correspondence between different system environment information and the security levels of fingerprint identification and the second correspondence between different security levels of fingerprint identification and the feature thresholds are stored, consequently, once the current system environment information is obtained, the feature threshold corresponding to the security level of fingerprint identification for the current system environment can be obtained based on the current system environment information and the first and second correspondences, thereby facilitating achievement of the fingerprint identification.

Fig. 13 is a block diagram illustrating another apparatus for fingerprint identification according to an exemplary embodiment. As shown in Fig. 13, the apparatus, based on the embodiment as shown in Fig. 12, further includes a second prompt message display module 131 and a second receiving and display module 132.

The second prompt message display module 131 is configured to, before receiving from a user the security levels of fingerprint identification set for different system environment and the feature thresholds set for different security levels of fingerprint identification, display a prompt message to prompt the user to set a security level of fingerprint identification for system environment.

The second receiving and display module 132 is configured to receive from the user a trigger action and display an interface for setting security levels of fingerprint identification according to the trigger action.

A process of fingerprint identification for the apparatus shown in Fig. 13 may refer to corresponding parts in the embodiment of method shown in Fig. 6 and will not be elaborated herein.

According to the embodiment described above, the interface for setting security levels of fingerprint identification is displayed, such that the user is able to set security levels of fingerprint identification for different system environment directly on the interface for setting security levels of fingerprint identification, with no need for the user to access the interface for setting security levels of fingerprint identification by other means, thereby achieving simplified operation.

With respect to the apparatus in the above embodiments, the specific manners for performing operations for individual modules and submodules therein have been described in detail in the embodiments regarding the methods, which will not be elaborated herein.

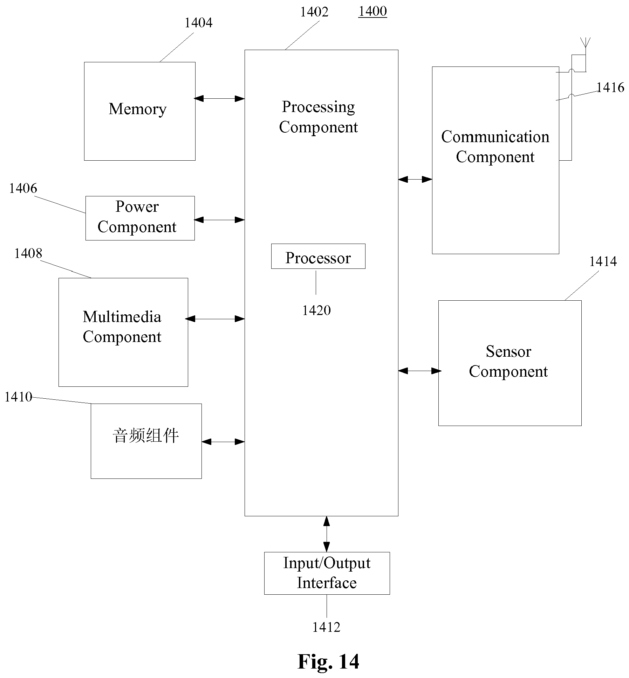

Fig. 14 is a block diagram illustrating a device applicable for fingerprint identification according to an exemplary embodiment. For example, the device 1400 may be a mobile phone, a computer, a digital broadcast terminal, a messaging device, a gaming console, a tablet device, a medical device, an exercise equipment, a personal digital assistant, an aircraft, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for fingerprint identification utilizing a terminal device, comprising:
displaying (S301) a prompt message to prompt a user of the terminal device to set a security level of fingerprint identification for a current application program of the terminal device;
receiving (S302) from the user a trigger action on the terminal device, and displaying an interface for setting security levels of fingerprint identification according to the trigger action;
receiving (S201), from a user, a security level of fingerprint identification set for the application program;
setting a feature threshold for said security level of fingerprint identification;
acquiring (S101) a fingerprint image and extracting feature information of the fingerprint image;
determining (SI02) the current application program of the terminal device and obtaining the feature threshold corresponding to the security level of fingerprint identification based on the current application of the terminal device; and
comparing (SI03) the feature information with verification feature information stored in advance, and determining that the fingerprint identification succeeds if a result of the comparing reaches the feature threshold, and determining that the fingerprint identification fails if the result of the comparing does not reach the feature threshold.
**characterized in that**: the step of displaying (S301) a prompt message to the user comprises displaying the prompt message to the user at intervals, such that the user is periodically prompted to set a security level of fingerprint identification for the current application program.

2. The method for fingerprint identification of claim 1, wherein the determining the current application program of the terminal device and obtaining the feature threshold corresponding to a security level of fingerprint identification based on the current application program of the terminal device comprises:
obtaining a current application program identifier and obtaining the feature threshold corresponding to the security level of fingerprint identification for the current application program based on the current application program identifier.

3. The method for fingerprint identification of claim 2, wherein the method further comprises:
prior to the obtaining the feature threshold corresponding to the security level of fingerprint identification for the current application program based on the current application program identifier:
storing a first correspondence between the application program identifier of said application program and its set security level of fingerprint identification, and storing a second correspondence between said security level of fingerprint identification and its set feature threshold.

4. The method for fingerprint identification of claim 3, wherein obtaining the feature threshold corresponding to the security level of fingerprint identification for a current application program based on the current application program identifier comprises:
obtaining (S204) the security level of fingerprint identification for the current application program according to the current application program identifier and its first correspondence; and
obtaining (S205) the feature threshold corresponding to the security level of fingerprint identification for the current application program according to the security level of fingerprint identification for the current application program and its second correspondence.

5. The method for fingerprint identification of any one of the preceding claims, further comprising, prior to the method steps of any one of the preceding claims:
obtaining information regarding the current status of the terminal device;
wherein the current status of the terminal device includes locked and unlocked states,
obtaining a second feature threshold corresponding to the security level of fingerprint identification for the current status of the terminal device based on the information regarding the current status of the terminal device;
acquiring a fingerprint image and extracting feature information of the fingerprint image;
comparing the feature information with verification feature information stored in advance, and determining that the fingerprint identification succeeds if a result of the comparing reaches the second feature threshold, and determining that the fingerprint identification fails if the result of the comparing does not reach the second feature threshold.

6. The method for fingerprint identification of claim 5, wherein the method further comprises:
prior to the obtaining the second feature threshold corresponding to the security level of fingerprint identification for the current status of the terminal device on the information regarding the current status of the terminal device, receiving, from a user, a security level of fingerprint identification set for a system environment and a second feature threshold set for said security level of fingerprint identification; and
storing a third correspondence between the information regarding the current status of the terminal device and its set security level of fingerprint identification, and storing a fourth correspondence between said security level of fingerprint identification and its set second feature threshold.

7. The method for fingerprint identification of claim 6, wherein the obtaining the second feature threshold corresponding to the security level of fingerprint identification for current status of the terminal device based on the information regarding the current status of the terminal device comprises:
obtaining the security level of fingerprint identification for the current status of the terminal device to the information regarding the current status of the terminal device and its third correspondence; and
obtaining the second feature threshold corresponding to the security level of fingerprint identification for the current status of the terminal device according to the security level of fingerprint identification for the current status of the terminal device and its fourth correspondence.

8. The method for fingerprint identification of claim 6 or 7, wherein the method further comprises:
prior to the receiving from a user the security level of fingerprint identification set for respective current status of the terminal device and the second feature threshold set for said security level of fingerprint identification, displaying (S601) a prompt message to prompt the user to set the security level of fingerprint identification for said current status of the terminal device; and
receiving (S602) from the user a trigger action and displaying an interface for setting security levels of fingerprint identification according to the trigger action.

9. An apparatus comprising a terminal device for fingerprint identification, **characterized in** comprising:
a first prompt message display module (96) configured to display a prompt message to prompt a user of the terminal device to set a security level of fingerprint identification for a current application program of the terminal device;
a first receiving and display module (97) configured to receive from the user a trigger action and display an interface for setting security levels of fingerprint identification according to the trigger action;
a first receiving module (94) configured to receive from the user the security level of fingerprint identification set for the application program and a feature threshold set for said security level of fingerprint identification;
an acquisition and extraction module (91) configured to acquire a fingerprint image and extract feature information of the fingerprint image;
a determining and obtaining module (92) configured to determine the current application program of the terminal device and obtain a feature threshold corresponding to the security level of fingerprint identification based on the current application program of the terminal device; and
a comparison and identification module (93) configured to compare the feature information extracted by the acquisition and extraction module with verification feature information stored in advance, and determine that the fingerprint identification succeeds if a comparison result reaches the feature threshold obtained by the obtaining module, and determine that the fingerprint identification fails if the comparison result does not reach the feature threshold
**characterized in that**: the first prompt message display module (96) is configured to display the prompt message to the user at intervals, such that the user is periodically prompted to set a security level of fingerprint identification for the current application program.

10. The apparatus for fingerprint identification of claim 9, wherein the determining and obtaining module comprises:
a first obtaining submodule (921) configured to obtain a current application program identifier and obtain the feature threshold corresponding to the security level of fingerprint identification for the current application program based on the current application program identifier.

11. The apparatus for fingerprint identification of claim 10, wherein the apparatus further comprises:
a first storage module (95) configured to store a first correspondence between the application program identifier of said application program and its set security level of fingerprint identification, and store a second correspondence between the said security level of fingerprint identification and its set feature threshold.

12. The apparatus for fingerprint identification of claim 11, wherein the first obtaining submodule comprises:
a first security level obtaining unit (9211) configured to obtain the security level of fingerprint identification for the current application program according to the current application program identifier and its first correspondence; and
a first feature threshold obtaining unit (9212) configured to obtain the feature threshold corresponding to the security level of fingerprint identification for the current application program according to the security level of fingerprint identification for the current application program obtained by the first security level obtaining unit and its second correspondence.

13. A computer program comprising instructions which, when the program is executed by a computer, cause the computer to carry out the method according to any one of claims 1 to 8.

## Patentansprüche

1. Verfahren zur Fingerabdruckerkennung unter Verwendung eines Endgeräts, das Folgendes aufweist:
Anzeigen (S301) einer Aufforderungsmeldung zum Auffordern eines Benutzers des Endgeräts zum Einstellen einer Fingerabdruckerkennungs-Sicherheitsebene für ein aktuelles Anwendungsprogramm des Endgeräts;
Empfangen (S302) einer Auslöseaktion auf dem Endgerät vom Benutzer und Anzeigen einer Schnittstelle zum Einstellen von Fingerabdruckerkennungs-Sicherheitsebenen gemäß der Auslöseaktion;
Empfangen (S201) einer für das Anwendungsprogramm eingestellten Fingerabdruckerkennungs-Sicherheitsebene von einem Benutzer;
Einstellen einer Merkmalsschwelle für die genannte Fingerabdruckerkennungs-Sicherheitsebene;
Erfassen (S101) eines Fingerabdruckbilds und Extrahieren von Merkmalsinformationen des Fingerabdruckbilds;
Ermitteln (S102) des aktuellen Anwendungsprogramms des Endgeräts und Beschaffen der der Fingerabdruckerkennungs-Sicherheitsebene entsprechenden Merkmalsschwelle auf Basis der aktuellen Anwendung des Endgeräts; und
Vergleichen (S103) der Merkmalsinformationen mit vorab gespeicherten Verifizierungsmerkmalsinformationen und Ermitteln, dass die Fingerabdruckerkennung erfolgreich ist, falls ein Vergleichsergebnis die Merkmalsschwelle erreicht, und Ermitteln, dass die Fingerabdruckerkennung erfolglos ist, falls das Vergleichsergebnis die Merkmalsschwelle nicht erreicht,
**dadurch gekennzeichnet, dass**: der Schritt des dem Benutzer Anzeigens (S301) einer Aufforderungsmeldung das Anzeigen der Aufforderungsmeldung dem Benutzer in Abständen aufweist, so dass der Benutzer periodisch aufgefordert wird, eine Fingerabdruckerkennungs-Sicherheitsebene für das aktuelle Anwendungsprogramm einzustellen.

2. Verfahren zur Fingerabdruckerkennung nach Anspruch 1, wobei das Bestimmen des aktuellen Anwendungsprogramms des Endgeräts und das Beschaffen der einer Fingerabdruckerkennungs-Sicherheitsebene entsprechenden Merkmalsschwelle auf Basis des aktuellen Anwendungsprogramms des Endgeräts Folgendes aufweisen:
Beschaffen eines Bezeichners des aktuellen Anwendungsprogramms und Beschaffen der der Fingerabdruckerkennungs-Sicherheitsebene entsprechenden Merkmalsschwelle für das aktuelle Anwendungsprogramm auf Basis des Bezeichners des aktuellen Anwendungsprogramms.

3. Verfahren zur Fingerabdruckerkennung nach Anspruch 2, wobei das Verfahren ferner Folgendes aufweist:
vor dem Beschaffen der der Fingerabdruckerkennungs-Sicherheitsebene entsprechenden Merkmalsschwelle für das aktuelle Anwendungsprogramm auf Basis des Bezeichners des aktuellen Anwendungsprogramms;
Speichern einer ersten Entsprechung zwischen dem Anwendungsprogrammbezeichner des genannten Anwendungsprogramms und seiner eingestellten Fingerabdruckerkennungs-Sicherheitsebene und Speichern einer zweiten Entsprechung zwischen der genannten Fingerabdruckerkennungs-Sicherheitsebene und ihrer eingestellten Merkmalsschwelle.

4. Verfahren zur Fingerabdruckerkennung nach Anspruch 3, wobei das Beschaffen der der Fingerabdruckerkennungs-Sicherheitsebene entsprechenden Merkmalsschwelle für ein aktuelles Anwendungsprogramm auf Basis des Bezeichners des aktuellen Anwendungsprogramms Folgendes aufweist:
Beschaffen (S204) der Fingerabdruckerkennungs-Sicherheitsebene für das aktuelle Anwendungsprogramm gemäß dem Bezeichner des aktuellen Anwendungsprogramms und seiner ersten Entsprechung; und
Beschaffen (S205) der der Fingerabdruckerkennungs-Sicherheitsebene entsprechenden Merkmalsschwelle für das aktuelle Anwendungsprogramm gemäß der Fingerabdruckerkennungs-Sicherheitsebene für das aktuelle Anwendungsprogramm und seiner zweiten Entsprechung.

5. Verfahren zur Fingerabdruckerkennung nach einem der vorhergehenden Ansprüche, das ferner vor den Verfahrensschritten nach einem der vorhergehenden Ansprüche Folgendes aufweist:
Beschaffen von Informationen bezüglich dem aktuellen Status des Endgeräts;
wobei der aktuelle Status des Endgeräts gesperrte und entsperrte Zustände enthält,
Beschaffen einer zweiten, der Fingerabdruckerkennungs-Sicherheitsebene entsprechenden Merkmalsschwelle für den aktuellen Status des Endgeräts auf Basis der Informationen bezüglich dem aktuellen Status des Endgeräts;
Erfassen eines Fingerabdruckbilds und Extrahieren von Merkmalsinformationen des Fingerabdruckbilds;
Vergleichen der Merkmalsinformationen mit vorab gespeicherten Verifizierungsmerkmalsinformationen und Ermitteln, dass die Fingerabdruckerkennung erfolgreich ist, falls ein Vergleichsergebnis die zweite Merkmalsschwelle erreicht, und Ermitteln, dass die Fingerabdruckerkennung erfolglos ist, falls das Vergleichsergebnis die zweite Merkmalsschwelle nicht erreicht.

6. Verfahren zur Fingerabdruckerkennung nach Anspruch 5, wobei das Verfahren ferner Folgendes aufweist:
vor dem Beschaffen der zweiten, der Fingerabdruckerkennungs-Sicherheitsebene entsprechenden Merkmalsschwelle für den aktuellen Status des Endgeräts auf den Informationen bezüglich dem aktuellen Status des Endgeräts Empfangen einer für eine Systemumgebung eingestellten Fingerabdruckerkennungs-Sicherheitsebene und einer zweiten, für die genannte Fingerabdruckerkennungs-Sicherheitsebene eingestellten Merkmalsschwelle; und
Speichern einer dritten Entsprechung zwischen den Informationen bezüglich dem aktuellen Status des Endgeräts und seiner eingestellten Fingerabdruckerkennungs-Sicherheitsebene und Speichern einer vierten Entsprechung zwischen der genannten Fingerabdruckerkennungs-Sicherheitsebene und ihrer eingestellten zweiten Merkmalsschwelle.

7. Verfahren zur Fingerabdruckerkennung nach Anspruch 6, wobei das Beschaffen der zweiten, der Fingerabdruckerkennungs-Sicherheitsebene entsprechenden Merkmalsschwelle für den aktuellen Status des Endgeräts auf Basis der Informationen bezüglich dem aktuellen Status des Endgeräts Folgendes aufweist:
Beschaffen der Fingerabdruckerkennungs-Sicherheitsebene für den aktuellen Status des Endgeräts zu den Informationen bezüglich dem aktuellen Status des Endgeräts und seiner dritten Entsprechung; und
Beschaffen der zweiten, der Fingerabdruckerkennungs-Sicherheitsebene entsprechenden Merkmalsschwelle für den aktuellen Status des Endgeräts gemäß der Fingerabdruckerkennungs-Sicherheitsebene für den aktuellen Status des Endgeräts und seiner vierten Entsprechung.

8. Verfahren zur Fingerabdruckerkennung nach Anspruch 6 oder 7, wobei das Verfahren ferner Folgendes aufweist:
vor dem Empfangen der für den jeweiligen aktuellen Status des Endgeräts eingestellten Fingerabdruckerkennungs-Sicherheitsebene und der für die genannte Fingerabdruckerkennungs-Sicherheitsebene eingestellten zweiten Merkmalsschwelle von einem Benutzer Anzeigen (S601) einer Aufforderungsmeldung zum Auffordern des Benutzers zum Einstellen der Fingerabdruckerkennungs-Sicherheitsebene für den genannten aktuellen Status des Endgeräts; und
Empfangen (S602) einer Auslöseaktion vom Benutzer und Anzeigen einer Schnittstelle zum Einstellen von Fingerabdruckerkennungs-Sicherheitsebenen gemäß der Auslöseaktion.

9. Endgerät aufweisende Vorrichtung zur Fingerabdruckerkennung, **dadurch gekennzeichnet, dass** sie Folgendes aufweist:
ein erstes Aufforderungsmeldungsanzeigemodul (96), das zum Anzeigen einer Aufforderungsmeldung zum Auffordern eines Benutzers des Endgeräts zum Einstellen einer Fingerabdruckerkennungs-Sicherheitsebene für ein aktuelles Anwendungsprogramm des Endgeräts konfiguriert ist;
ein erstes Empfangs- und Anzeigemodul (97), das zum Empfangen einer Auslöseaktion vom Benutzer und zum Anzeigen einer Schnittstelle zum Einstellen von Fingerabdruckerkennungs-Sicherheitsebenen gemäß der Auslöseaktion konfiguriert ist;
ein erstes Empfangsmodul (94), das zum Empfangen der für das Anwendungsprogramm eingestellten Fingerabdruckerkennungs-Sicherheitsebene von dem Benutzer und einer für die genannte Fingerabdruckerkennungs-Sicherheitsebene eingestellten Merkmalsschwelle konfiguriert ist;
ein Erfassungs- und Extraktionsmodul (91), das zum Erfassen eines Fingerabdruckbilds und zum Extrahieren von Merkmalsinformationen des Fingerabdruckbilds konfiguriert ist;
ein Ermittlungs- und Beschaffungsmodul (92), das zum Ermitteln des aktuellen Anwendungsprogramms des Endgeräts und zum Beschaffen einer der Fingerabdruckerkennungs-Sicherheitsebene entsprechenden Merkmalsschwelle auf Basis des aktuellen Anwendungsprogramms des Endgeräts konfiguriert ist; und
ein Vergleichs- und Erkennungsmodul (93), das zum Vergleichen der durch das Erfassungs- und Extraktionsmodul extrahierten Merkmalsinformationen mit vorab gespeicherten Verifizierungsmerkmalsinformationen und zum Ermitteln, dass die Fingerabdruckerkennung erfolgreich ist, falls ein Vergleichsergebnis die durch das Beschaffungsmodul beschaffte Merkmalsschwelle erreicht, und zum Ermitteln, dass die Fingerabdruckerkennung erfolglos ist, falls das Vergleichsergebnis die Merkmalsschwelle nicht erreicht, konfiguriert ist,
**dadurch gekennzeichnet, dass**: das erste Aufforderungsmeldungsanzeigemodul (96) zum Anzeigen der Aufforderungsmeldung dem Benutzer in Abständen konfiguriert ist, so dass der Benutzer periodisch aufgefordert wird, eine Fingerabdruckerkennungs-Sicherheitsschwelle für das aktuelle Anwendungsprogramm einzustellen.

10. Vorrichtung zur Fingerabdruckerkennung nach Anspruch 9, wobei das Ermittlungs- und Beschaffungsmodul Folgendes aufweist:
ein erstes Beschaffungsuntermodul (921), das zum Beschaffen eines Bezeichners des aktuellen Anwendungsprogramms und zum Beschaffen der der Fingerabdruckerkennungs-Sicherheitsebene entsprechenden Merkmalsschwelle für das aktuelle Anwendungsprogramm auf Basis des Bezeichners des aktuellen Anwendungsprogramms konfiguriert ist.

11. Vorrichtung zur Fingerabdruckerkennung nach Anspruch 10, wobei die Vorrichtung ferner Folgendes aufweist:
ein erstes Speichermodul (95), das zum Speichern einer ersten Entsprechung zwischen dem Anwendungsprogrammbezeichner des genannten Anwendungsprogramms und seiner eingestellten Fingerabdruckerkennungs-Sicherheitsebene und zum Speichern einer zweiten Entsprechung zwischen der genannten Fingerabdruckerkennungs-Sicherheitsebene und ihrer eingestellten Merkmalsschwelle konfiguriert ist.

12. Vorrichtung zur Fingerabdruckerkennung nach Anspruch 11, wobei das erste Beschaffungsuntermodul Folgendes aufweist:
eine erste Sicherheitsebenen-Beschaffungseinheit (9211), die zum Beschaffen der Fingerabdruckerkennungs-Sicherheitsebene für das aktuelle Anwendungsprogramm gemäß dem Bezeichner des aktuellen Anwendungsprogramms und seiner ersten Entsprechung konfiguriert ist; und
eine erste Merkmalsschwellen-Beschaffungseinheit (9212), die zum Beschaffen der der Fingerabdruckerkennungs-Sicherheitsebene entsprechenden Merkmalsschwelle für das aktuelle Anwendungsprogramm gemäß der durch die erste Sicherheitsebenen-Beschaffungseinheit beschafften Fingerabdruckerkennungs-Sicherheitsebene für das aktuelle Anwendungsprogramm und ihrer zweiten Entsprechung konfiguriert ist.

13. Computerprogramm, das Anweisungen aufweist, die bei Ausführung des Programms durch einen Computer den Computer zum Durchführen des Verfahrens nach einem der Ansprüche 1 bis 8 veranlassen.

## Revendications

1. Procédé d'identification d'empreintes digitales utilisant un dispositif terminal, comprenant :
afficher (S301) un message d'invite pour inviter un utilisateur du dispositif terminal à régler un niveau de sécurité d'identification d'empreintes digitales pour un programme d'application courante du dispositif terminal ;
recevoir (S302) de l'utilisateur une action de déclenchement sur le dispositif terminal, et afficher une interface pour régler des niveaux de sécurité d'identification d'empreintes digitales conformément à l'action de déclenchement ;
recevoir (S201), d'un utilisateur, un niveau de sécurité d'identification d'empreintes digitales réglé pour le programme d'application ;
régler un seuil de caractéristique pour ledit niveau de sécurité d'identification d'empreintes digitales ;
acquérir (S101) une image d'empreintes digitales et extraire des informations de caractéristique de l'image d'empreintes digitales ;
déterminer (S102) le programme d'application courante du dispositif terminal et obtenir le seuil de caractéristique correspondant au niveau de sécurité d'identification d'empreintes digitales sur la base de l'application courante du dispositif terminal ; et
comparer (S103) les informations de caractéristique à des informations de caractéristique de vérification stockées à l'avance, et déterminer que l'identification d'empreintes digitales réussit si un résultat du fait de comparer atteint le seuil de caractéristique, et déterminer que l'identification d'empreintes digitales échoue si le résultat du fait de comparer n'atteint pas le seuil de caractéristique,
**caractérisé en ce que** : l'étape consistant à afficher (S301) un message d'invite à l'utilisateur comprend afficher le message d'invite à l'utilisateur à des intervalles, de telle sorte que l'utilisateur est périodiquement invité à régler un niveau de sécurité d'identification d'empreintes digitales pour le programme d'application courante.

2. Procédé d'identification d'empreintes digitales selon la revendication 1, dans lequel le fait de déterminer le programme d'application courante du dispositif terminal et d'obtenir le seuil de caractéristique correspondant à un niveau de sécurité d'identification d'empreintes digitales sur la base du programme d'application courante du dispositif terminal comprend :
obtenir un identificateur de programme d'application courante et obtenir le seuil de caractéristique correspondant au niveau de sécurité d'identification d'empreintes digitales pour le programme d'application courante sur la base de l'identificateur de programme d'application courante.

3. Procédé d'identification d'empreintes digitales selon la revendication 2, où le procédé comprend en outre :
préalablement au fait d'obtenir le seuil de caractéristique correspondant au niveau de sécurité d'identification d'empreintes digitales pour le programme d'application courante sur la base de l'identificateur de programme d'application courante :
stocker une première correspondance entre l'identificateur de programme d'application dudit programme d'application et son niveau de sécurité réglé d'identification d'empreintes digitales, et stocker une deuxième correspondance entre ledit niveau de sécurité d'identification d'empreintes digitales et son seuil de caractéristique réglé.

4. Procédé d'identification d'empreintes digitales selon la revendication 3, dans lequel obtenir le seuil de caractéristique correspondant au niveau de sécurité d'identification d'empreintes digitales pour un programme d'application courante sur la base de l'identificateur de programme d'application courante comprend :
obtenir (S204) le niveau de sécurité d'identification d'empreintes digitales pour le programme d'application courante conformément à l'identificateur de programme d'application courante et à sa première correspondance ; et
obtenir (S205) le seuil de caractéristique correspondant au niveau de sécurité d'identification d'empreintes digitales pour le programme d'application courante conformément au niveau de sécurité d'identification d'empreintes digitales pour le programme d'application courante et à sa deuxième correspondance.

5. Procédé d'identification d'empreintes digitales selon l'une quelconque des revendications précédentes, comprenant en outre, préalablement aux étapes du procédé selon l'une quelconque des revendications précédentes :
obtenir des informations concernant l'état courant du dispositif terminal ;
où l'état courant du dispositif terminal comprend des états bloqué et non bloqué,
obtenir un deuxième seuil de caractéristique correspondant au niveau de sécurité d'identification d'empreintes digitales pour l'état courant du dispositif terminal sur la base des informations concernant l'état courant du dispositif terminal ;
acquérir une image d'empreintes digitales et extraire des informations de caractéristique de l'image d'empreintes digitales,
comparer les informations de caractéristique à des informations de caractéristique de vérification stockées à l'avance, et déterminer que l'identification d'empreintes digitales réussit si un résultat du fait de comparer atteint le deuxième seuil de caractéristique, et déterminer que l'identification d'empreintes digitales échoue si le fait de comparer n'atteint pas le deuxième seuil de caractéristique.

6. Procédé d'identification d'empreintes digitales selon la revendication 5, où le procédé comprend en outre :
préalablement au fait d'obtenir le deuxième seuil de caractéristique correspondant au niveau de sécurité d'identification d'empreintes digitales pour l'état courant du dispositif terminal sur les informations concernant l'état courant du dispositif terminal, recevoir, d'un utilisateur, un niveau de sécurité d'identification d'empreintes digitales réglé pour un environnement système et un deuxième seuil de caractéristique réglé pour ledit niveau de sécurité d'identification d'empreintes digitales ; et
stocker une troisième correspondance entre les informations concernant l'état courant du dispositif terminal et son niveau de sécurité réglé d'identification d'empreintes digitales, et stocker une quatrième correspondance entre ledit niveau de sécurité d'identification d'empreintes digitales et son deuxième seuil de caractéristique réglé.

7. Procédé d'identification d'empreintes digitales selon la revendication 6, dans lequel le fait d'obtenir le deuxième seuil de caractéristique correspondant au niveau de sécurité d'identification d'empreintes digitales pour l'état courant du dispositif terminal sur la base des informations concernant l'état courant du dispositif terminal comprend :
obtenir le niveau de sécurité d'identification d'empreintes digitales pour l'état courant du dispositif terminal aux informations concernant l'état courant du dispositif terminal et à sa troisième correspondance ; et
obtenir le deuxième seuil de caractéristique correspondant au niveau de sécurité d'identification d'empreintes digitales pour l'état courant du dispositif terminal conformément au niveau de sécurité d'identification d'empreintes digitales pour l'état courant du dispositif terminal et à sa quatrième correspondance.

8. Procédé d'identification d'empreintes digitales selon la revendication 6 ou 7, où le procédé comprend en outre :
préalablement au fait de recevoir d'un utilisateur le niveau de sécurité d'identification d'empreintes digitales réglé pour l'état courant respectif du dispositif terminal et le deuxième seuil de caractéristique réglé pour ledit niveau de sécurité d'identification d'empreintes digitales, afficher (S601) un message d'invite pour inviter l'utilisateur à régler le niveau de sécurité d'identification d'empreintes digitales pour ledit état courant du dispositif terminal ; et
recevoir (S602) de l'utilisateur une action de déclenchement et afficher une interface pour régler des niveaux de sécurité d'identification d'empreintes digitales conformément à l'action de déclenchement.

9. Appareil comprenant un dispositif terminal pour l'identification d'empreintes digitales, caractérisé en comprenant :
un premier module d'affichage de message d'invite (96) configuré pour afficher un message d'invite pour inviter un utilisateur du dispositif terminal à régler un niveau de sécurité d'identification d'empreintes digitales pour un programme d'application courante du dispositif terminal ;
un premier module de réception et d'affichage (97) configuré pour recevoir de l'utilisateur une action de déclenchement et afficher une interface pour régler des niveaux de sécurité d'identification d'empreintes digitales conformément à l'action de déclenchement ;
un premier module de réception (94) configuré pour recevoir de l'utilisateur le niveau de sécurité d'identification d'empreintes digitales réglé pour le programme d'application et un seuil de caractéristique réglé pour ledit niveau de sécurité d'identification d'empreintes digitales ;
un module d'acquisition et d'extraction (91) configuré pour acquérir une image d'empreintes digitales et extraire des informations de caractéristique de l'image d'empreintes digitales ;
un module de détermination et d'obtention (92) configuré pour déterminer le programme d'application courante du dispositif terminal et obtenir un seuil de caractéristique correspondant au niveau de sécurité d'identification d'empreintes digitales sur la base du programme d'application courante du dispositif terminal ; et
un module de comparaison et d'identification (93) configuré pour comparer les informations de caractéristique extraites par le module d'acquisition et d'extraction à des informations de caractéristique de vérification stockées à l'avance, et déterminer que l'identification d'empreintes digitales réussit si un résultat de la comparaison atteint le seuil de caractéristique obtenu par le module d'obtention, et déterminer que l'identification d'empreintes digitales échoue si le résultat de la comparaison n'atteint pas le seuil de caractéristique ;
**caractérisé en ce que** : le premier module d'affichage de message d'invite (96) est configuré pour afficher le message d'invite à l'utilisateur à des intervalles, de telle sorte que l'utilisateur est périodiquement invité à régler un niveau de sécurité d'identification d'empreintes digitales pour le programme d'application courante.

10. Appareil d'identification d'empreintes digitales selon la revendication 9, dans lequel le module de détermination et d'obtention comprend :
un premier sous-module d'obtention (921) configuré pour obtenir un identificateur de programme d'application courante et obtenir le seuil de caractéristique correspondant au niveau de sécurité d'identification d'empreintes digitales pour le programme d'application courante sur la base de l'identificateur de programme d'application courante.

11. Appareil d'identification d'empreintes digitales selon la revendication 10, où l'appareil comprend en outre :
un premier module de stockage (95) configuré pour stocker une première correspondance entre l'identificateur de programme d'application dudit programme d'application et son niveau de sécurité réglé d'identification d'empreintes digitales, et stocker une deuxième correspondance entre ledit niveau de sécurité d'identification d'empreintes digitales et son seuil de caractéristique réglé.

12. Appareil d'identification d'empreintes digitales selon la revendication 11, dans lequel le premier sous-module d'obtention comprend :
une première unité d'obtention de niveau de sécurité (9211) configurée pour obtenir le niveau de sécurité d'identification d'empreintes digitales pour le programme d'application courante conformément à l'identificateur de programme d'application courante et à sa première correspondance ; et
une première unité d'obtention de seuil de caractéristique (9212) configurée pour obtenir le seuil de caractéristique correspondant au niveau de sécurité d'identification d'empreintes digitales pour le programme d'application courante conformément au niveau de sécurité d'identification d'empreintes digitales pour le programme d'application courante obtenu par la première unité d'obtention de niveau de sécurité et **à** sa deuxième correspondance.

13. Programme informatique comprenant des instructions qui, lorsque le programme est exécuté par un ordinateur, font que l'ordinateur mette en œuvre le procédé selon l'une quelconque des revendications 1 à 8.
